(19)

Europäisches
Patentamt
European
Patent Office
Office européen
des brevets

(11) **EP 3 901 114 A1**

(12) **EUROPEAN PATENT APPLICATION**
published in accordance with Art. 153(4) EPC

(43) Date of publication:
**27.10.2021 Bulletin 2021/43**

(51) Int Cl.:
**C03C 27/12** *(2006.01)*          **B32B 7/12** *(2006.01)*
**B32B 17/10** *(2006.01)*

(21) Application number: **19900845.9**

(22) Date of filing: **20.12.2019**

(86) International application number:
**PCT/JP2019/049985**

(87) International publication number:
**WO 2020/130116 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2018 JP 2018240379**

(71) Applicant: **SEKISUI CHEMICAL CO., LTD.**
**Osaka-shi**
**Osaka**
**530-8565 (JP)**

(72) Inventors:
• **HIGASHIONNA, Yui**
  **Mishima-gun, Osaka 618-0021 (JP)**
• **MATSUKI, Nobuo**
  **Mishima-gun, Osaka 618-0021 (JP)**
• **KAWADA, Shinji**
  **Mishima-gun, Osaka 618-0021 (JP)**

(74) Representative: **Ter Meer Steinmeister & Partner**
**Patentanwälte mbB**
**Nymphenburger Straße 4**
**80335 München (DE)**

(54) **INTERLAYER FOR LAMINATED GLASS AND LAMINATED GLASS**

(57)    The interlayer film for laminated glass of the present invention is an interlayer film for laminated glass that is disposed between an inorganic glass and an organic glass to bond the inorganic glass and the organic glass together, wherein the interlayer film for laminated glass comprises at least a first resin portion and a second resin portion, the interlayer film for laminated glass has a total thickness of 50 $\mu$m or more and 2.0 mm or less, a product (kG1') of a storage modulus (G1') of the first resin portion measured at 80°C at a frequency of 1 Hz in a shear mode and a coefficient (k) calculated by the following formula is less than $1.1 \times 10^7$ Pa, and a storage modulus (G2') of the second resin portion measured at 80°C at a frequency of 1 Hz in a shear mode is larger than $2.5 \times 10^4$ Pa,

$$k = (Cb \times Tb) / (Ca \times Ta)$$

wherein Ca is a linear expansion coefficient of the inorganic glass, Cb is a linear expansion coefficient of the organic glass, Ta is a thickness of the inorganic glass, and Tb is a thickness of the organic glass.

**Description**

Technical Field

The present invention relates to an interlayer film for laminated glass used for a laminated glass and to a laminated glass comprising the interlayer film for laminated glass.

Background Art

Conventionally, an integrated laminated glass in which an interlayer film for laminated glass is interposed between two glass plates is widely known. The interlayer film for laminated glass is often formed from a plasticized polyvinyl acetal in which a plasticizer is mixed with a polyvinyl acetal resin. Laminated glass is safe because glass fragments are less likely to scatter even if the laminated glass is damaged by an external impact, and is thus widely used as window glass of vehicles such as automobiles, aircraft, and buildings.

As the glass plates in a laminated glass, generally an inorganic glass is widely used. However, inorganic glass suffers from problems such as a heavy weight and cracking when subjected to an impact. Therefore, an organic glass such as a polycarbonate plate or a polymethyl methacrylate plate may be used for one of the laminated glass plates.

Laminated glass is generally produced by disposing an interlayer film for laminated glass between two glass plates and subjecting the laminated glass to thermocompression bonding under high temperature and high pressure in an autoclave or the like. However, when one of the two glass plates is an organic glass, the laminated glass may warp when it is returned to room temperature after the thermocompression bonding due to a difference in linear expansion coefficients between the inorganic glass and the organic glass.

Further, in a laminated glass, cells may be formed between the layers due to a difference in expansion coefficients or shrinkage rates of each layer when heating and cooling are repeated, for example, but when organic glass is used for the laminated glass, a difference in the expansion coefficients or in the shrinkage rates tends to occur, and cells are more likely to be formed between the layers. In addition, since organic glass is more likely to produce outgas than inorganic glass, this point also means that cells are more likely to be formed.

Conventionally, as disclosed in Patent Literature 1, for example, in an adhesive sheet for an interlayer film provided with two or more pressure-sensitive adhesive layers, in order to reduce cells and warpage that occur in an interlayer film for laminated glass, it is known to make each of the pressure-sensitive adhesive layers have specific viscoelastic properties.

Citation List

Patent Literature

PTL1: JP 2001-234129 A

Summary of Invention

Technical Problem

However, depending on the organic glass and the inorganic glass that are used, it may not be possible to sufficiently suppress the occurrence of warpage and cells simply by making each layer constituting the interlayer film for laminated glass have specific viscoelastic properties as in Patent Literature 1. Therefore, when an inorganic glass and an organic glass are used for the glass plates of laminated glass, it is required to further suppress the occurrence of warpage and cells.

Therefore, an object of the present invention is to provide an interlayer film for laminated glass capable of sufficiently suppressing the occurrence of warpage and cells when an inorganic glass and an organic glass are bonded to obtain a laminated glass.

Solution to Problem

As a result of diligent studies, the present inventors considered the linear expansion coefficients of inorganic glass and organic glass in order to sufficiently suppress the occurrence of warpage and cells, and found that it is necessary to adjust the storage modulus of first and second resin portions of the interlayer film for laminated glass, to complete the following invention.

That is, the present invention provides the following [1] to [8].

[1] An interlayer film for laminated glass that is disposed between an inorganic glass and an organic glass to bond the inorganic glass and the organic glass together, wherein

the interlayer film for laminated glass comprises at least a first resin portion and a second resin portion,
the interlayer film for laminated glass has a total thickness of 50 $\mu$m or more and 2.0 mm or less,
a product (kG1') of a storage modulus (G1') of the first resin portion measured at 80°C at a frequency of 1 Hz in a shear mode and a coefficient (k) calculated by the following formula (1) is less than $1.1 \times 10^7$ Pa, and
a storage modulus (G2') of the second resin portion measured at 80°C at a frequency of 1 Hz in a shear mode is larger than $2.5 \times 10^4$ Pa,

$$k = (Cb \times Tb) / (Ca \times Ta) \quad (1)$$

wherein Ca is a linear expansion coefficient of the inorganic glass, Cb is a linear expansion coefficient of the organic glass, Ta is a thickness of the inorganic glass, and Tb is a thickness of the organic glass.

[2] The interlayer film for laminated glass according to [1], wherein the storage modulus (G1') of the first resin portion is $8.0 \times 10^5$ Pa or less.
[3] The interlayer film for laminated glass according to [1] or [2], wherein a content of a plasticizer is 0 parts by mass or more and less than 10 parts by mass per 100 parts by mass of the resins included in the whole interlayer film for laminated glass.
[4] The interlayer film for laminated glass according to any one of [1] to [3], wherein the first and second resin portions each comprise at least one resin selected from the group consisting of an acrylic resin, a polyvinyl acetal resin, a polyvinyl alcohol resin, a polyurethane resin, an ethylene-vinyl acetate copolymer resin, an ionomer resin, a polyamide resin, and an isobutylene resin.
[5] The interlayer film for laminated glass according to any one of [1] to [4], comprising a first resin layer and a second resin layer provided on one surface of the first resin layer, wherein the first resin layer is composed of the first resin portion and the second resin layer is composed of the second resin portion.
[6] The interlayer film for laminated glass according to [5], comprising a third resin layer provided on the other surface of the first resin layer, wherein the third resin layer is composed of the second resin portion.
[7] The interlayer film for laminated glass according to any one of [1] to [4], wherein

the interlayer film for laminated glass has a single-layer structure, and has a phase-separated structure constituted by a first phase and a second phase, and
wherein the first phase is composed of a first resin portion and the second phase is composed of a second resin portion.

[8] A laminated glass comprising:

an interlayer film for laminated glass; and
an inorganic glass and an organic glass laminated via the interlayer film for laminated glass, wherein
the interlayer film for laminated glass comprises at least a first resin portion and a second resin portion,
the interlayer film for laminated glass has a total thickness of 50 $\mu$m or more and 2.0 mm or less,
a product (kG1') of a storage modulus (G1') of the first resin portion measured at 80°C at a frequency of 1 Hz in a shear mode and a coefficient (k) calculated by the following formula (1) is less than $1.1 \times 10^7$ Pa, and
a storage modulus (G2') of the second resin portion measured at 80°C at a frequency of 1 Hz in a shear mode is larger than $2.5 \times 10^4$ Pa,

$$k = (Cb \times Tb) / (Ca \times Ta) \quad (1)$$

wherein Ca is a linear expansion coefficient of the inorganic glass, Cb is a linear expansion coefficient of the organic glass, Ta is a thickness of the inorganic glass, and Tb is a thickness of the organic glass.

Advantageous Effects of Invention

According to the interlayer film for laminated glass of the present invention, when an inorganic glass and an organic glass are adhered to obtain a laminated glass, the occurrence of warpage and cells can be sufficiently suppressed.

Brief Description of Drawings

[Fig. 1] Fig. 1 illustrates an embodiment of a laminated glass when an interlayer film for laminated glass has a single-layer structure.
[Fig. 2] Fig. 2 illustrates an embodiment of a laminated glass when the interlayer film for laminated glass has a multilayer structure.
[Fig. 3] Fig. 3 illustrates another embodiment of a laminated glass when the interlayer film for laminated glass has a multilayer structure.

Description of Embodiments

The interlayer film for laminated glass of the present invention will now be described in detail.

[Interlayer film for laminated glass]

The interlayer film for laminated glass of the present invention (hereinafter, sometimes simply referred to as "interlayer film") is an interlayer film that is disposed between an organic glass and an inorganic glass to bond the organic glass and the inorganic glass together. The interlayer film for laminated glass comprises at least a first resin portion and a second resin portion. The first and second resin portions are not mixed with each other in the interlayer film and are distinguished as portions having different compositions. For example, in a multilayer structure, the first resin portion and the second resin portion constitute different layers from each other. On the other hand, when the interlayer film has a single-layer structure, the interlayer film composed of the single layer has a phase-separated structure in which the first resin portion and the second resin portion constitute different phases from each other.
The interlayer film of the present invention satisfies the following requirements (I) and (II).

(I) A product (kG1') of a storage modulus (G1') of the first resin portion measured at 80°C at a frequency of 1 Hz in a shear mode and a coefficient (k) calculated by the following formula is less than $1.1 \times 10^7$ Pa.

$$k = (Cb \times Tb) / (Ca \times Ta) \quad (1)$$

wherein Ca is a linear expansion coefficient of the inorganic glass, Cb is a linear expansion coefficient of the organic glass, Ta is a thickness of the inorganic glass, and Tb is a thickness of the organic glass.
(II) A storage modulus (G2') of the second resin portion measured at 80°C at a frequency of 1 Hz in a shear mode is larger than $2.5 \times 10^4$ Pa.

The coefficient (k) represented by the above formula (1) is an index representing, in a laminated glass obtained by adhering an organic glass and an inorganic glass with an interlayer film, for example, the rate between shrinkage amounts of each glass when cooled. The larger the value, the larger the difference in the shrinkage amounts, and the larger the value, the easier it is for the laminated glass to warp. In the present invention, by setting the product (kG1') of the coefficient (k) and the storage modulus (G1') of the first resin portion to less than $1.1 \times 10^7$ Pa, it is presumed that the stress acting according to the shrinkage amount is absorbed by the first resin portion, thereby preventing warpage from occurring during cooling or the like after thermocompression bonding of the glass and the interlayer film.
Further, in the present invention, as in the requirement (II), by providing a second resin portion having a storage modulus (G2') larger than $2.5 \times 10^4$ Pa, even if heating and cooling are repeated and the interlayer film and the glass repeatedly expand and shrink, cells are less likely to be formed between the layers.
On the other hand, when the product (kG1') of the interlayer film is $1.1 \times 10^7$ Pa or more or the storage modulus (G2') is $2.5 \times 10^4$ Pa or less, the laminated glass may warp during cooling or the like after the thermocompression bonding of the glass and the interlayer film, or cells may be formed when the laminated glass is repeatedly heated and cooled.
From the viewpoint of further suppressing warpage in the laminated glass, the product (kG1') in requirement (I) is preferably $6.2 \times 10^6$ Pa or less, more preferably $2.9 \times 10^6$ Pa or less, and further preferably $5.0 \times 10^5$ Pa or less.
The product (kG1') is not particularly limited, but is preferably $1.0 \times 10^3$ Pa or more, more preferably $1.0 \times 10^4$ Pa or more, further preferably $2.5 \times 10^4$ Pa or more, and particularly preferably $1.0 \times 10^5$ Pa or more. By setting the value of the product (kG1') to these lower limits or more, it is possible to prevent the mechanical strength and the like of the interlayer film from decreasing due to the storage modulus (G1') of the first resin portion being too low.

From the viewpoint of suppressing foaming, the storage modulus (G2') of the second resin portion shown in the requirement (II) is preferably $5.0 \times 10^4$ Pa or more.

Further, the storage modulus (G2') of the second resin portion is not particularly limited, but is preferably $5.0 \times 10^6$ Pa or less, and more preferably $5.0 \times 10^5$ Pa or less. By setting the value of the storage modulus (G2') to these upper limits or less, it is possible to prevent the adhesive strength and the like from decreasing due to the storage modulus (G2') being too high.

As described later, the storage modulus (G2') of the second resin portion can be adjusted within the above range by appropriately adjusting the type of resin used, the blending amount, the degree of polymerization of the resin, and the like.

From the viewpoint of suppressing warpage, the storage modulus (G1') of the first resin portion at 80°C is preferably $8.0 \times 10^5$ Pa or less, preferably $6.8 \times 10^5$ Pa or less, and more preferably $1.0 \times 10^5$ Pa or less.

The storage modulus (G1') of the first resin portion is not particularly limited, but is, for example, $1.0 \times 10^3$ Pa or more, and preferably $1.0 \times 10^4$ Pa or more. By setting the value of the storage modulus (G1') to these lower limits or more, it is possible to prevent mechanical strength and the like from decreasing due to the storage modulus (G1') of the first resin portion being too low.

Further, the storage modulus (G1') of the first resin portion may be higher or lower than the storage modulus (G2') of the second resin portion, but from the viewpoint of alleviating the stress caused by the difference in shrinkage amounts of the organic glass and the inorganic glass, it is preferably lower than the storage modulus (G2'). As described later, the first resin portion constitutes a core layer (first resin layer) in the multilayer structure. Therefore, in the multilayer structure described later, the storage modulus (G1') of the core layer (first resin layer) is preferably lower than the storage modulus (G2') of the skin layers (second and third resin layers). Further, in a single-layer structure, since the first resin portion is preferably an island portion of a sea-island structure, the storage modulus (G1') of the island portion is preferably lower than the storage modulus (G2') of the sea portion. Of course, the first resin portion may be the sea portion, and therefore in such a case the storage modulus of the sea portion may be lower than the storage modulus of the island portion.

As described later, the storage modulus (G1') of the first resin portion can be adjusted within the above range by appropriately adjusting the type of resin used, the blending amount, the degree of polymerization of the resin, and the like.

As described later, the storage moduli (G1') and (G2') can be determined by providing a film-like sample composed of each resin portion, measuring the viscoelasticity in a shear mode at a frequency of 1 Hz, and measuring the storage modulus at 80°C.

In the present invention, the smaller the coefficient (k), the more the warpage is suppressed. Therefore, from the viewpoint of suppressing warpage, the coefficient (k) is preferably low, and is preferably 40 or less, and more preferably 15 or less. Further, the larger the coefficient (k) is, the higher the bending rigidity is. Therefore, from the viewpoint of increasing the bending rigidity and improving the mechanical strength of the laminated glass, the coefficient (k) is preferably 1.0 or more, more preferably 2.0 or more, and further preferably 5.0 or more. In addition, when the coefficient (k) is high, the laminated glass tends to warp, but in the present invention, warping can be effectively suppressed by adjusting the storage modulus (G1') so as to satisfy the requirement (I) as described above

The interlayer film of the present invention has a total thickness of 50 $\mu$m or more and 2.0 mm or less. When the layer thickness is less than 50 $\mu$m or larger than 2.0 mm, even if the storage modulus of the interlayer film is adjusted so as to satisfy requirements (I) and (II), it may not be possible to sufficiently suppress warpage and foaming. Further, when the thickness of the interlayer film is less than 50 $\mu$m, the adhesiveness of the interlayer film may not be good. In addition, when the thickness is larger than 2.0 mm, the transparency of the interlayer film may be impaired.

From these viewpoints, the thickness of the interlayer film is preferably 0.1 mm or more, more preferably 0.25 mm or more, and further preferably 0.4 mm or more. Further, the thickness is more preferably 1.6 mm or less, and further preferably 1.2 mm or less.

The interlayer film of the present invention includes the first and second resin portions as described above. The resin constituting each of the first and second resin portions (hereinafter, the resins constituting the first and second resin portions are referred to as "first and second resins", respectively) is preferably a thermoplastic resin. By using a thermoplastic resin for the first and second resins, a pair of glass plates can be easily bonded via the interlayer film by thermocompression bonding in an autoclave or the like.

The first and second resins used for the interlayer film may each be selected from, for example, an acrylic resin, a polyvinyl acetal resin, a polyvinyl alcohol resin (PVA), a polyurethane resin (PU), an ethylene-vinyl acetate copolymer resin (EVA), an ionomer resin, a polyamide resin (PA), and an isobutylene resin. As described above, these resins are preferably thermoplastic resins. The first resin may be composed of one type of resin, or may be composed of a mixture of two or more types. Similarly, the second resin may be composed of one type of resin, or may be composed of a mixture of two or more types.

[Layer structure of interlayer film]

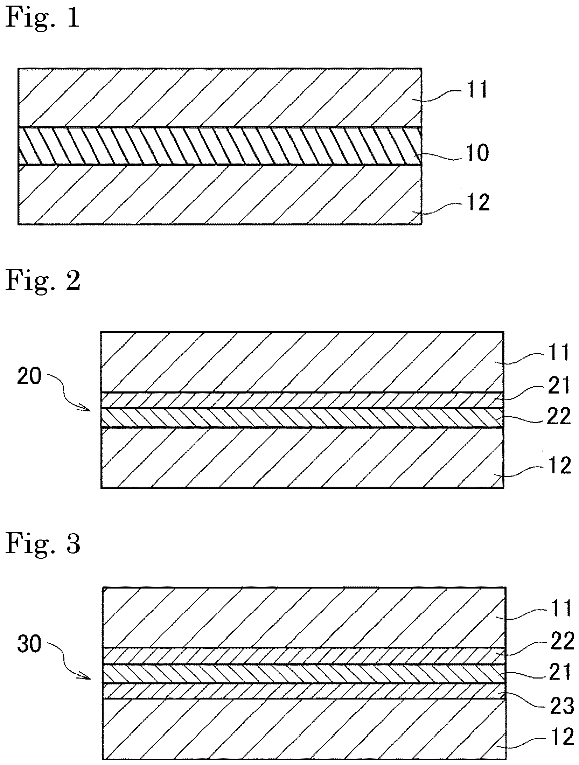

The interlayer film of the present invention may be an interlayer film 10 having a single-layer structure as illustrated in Fig. 1, or may have a multilayer structure in which a plurality of resin layers are provided. As illustrated in Fig. 1, in the interlayer film 10 having a single-layer structure, an organic glass 11 and an inorganic glass 12 are adhered to each other by the interlayer film 10 composed of a single layer to form a laminated glass.

As illustrated in Fig. 2, the interlayer film having a multilayer structure may be an interlayer film 20 including a first resin layer 21 and a second resin layer 22 provided on one surface of the first resin layer 21. Further, as shown in Fig. 3, the interlayer film having a multilayer structure may be an interlayer film 30 including the first resin layer 21, the second resin layer 22 provided on one surface of the first resin layer 21, and a third resin layer 23 provided on the other surface of the first resin layer 21. As described above, in the interlayer film 30 illustrated in Fig. 3, the first resin layer 21 constitutes an inner layer (core layer) of the interlayer film, and the second and third resin layers 22 and 23 constitute the layers (skin layers) on the surface sides of the interlayer film.

The interlayer film having a multilayer structure is preferably the interlayer film 30 in which, as illustrated in Fig. 3, the second and third resin layers 22 and 23 are respectively provided on one of both surfaces of the first resin layer 21. By providing on both surfaces of the first resin layer 21, the occurrence of warpage and foaming can be effectively suppressed.

The interlayer film 20 having the first and second resin layers 21 and 22 is preferably configured such that, for example, as illustrated in Fig. 2, the first resin layer 21 is adhered to the inorganic glass 11 and the second resin layer 22 is adhered to the organic glass 12. By disposing in this way, warpage is prevented, and the occurrence of cells is effectively prevented at the interface between the organic glass 12 and the interlayer film 20.

However, the first resin layer 21 may be disposed so as to be adhered to the organic glass 12 and the second resin layer 22 may be disposed so as to be adhered to the organic glass 11. As described later, the first resin layer 21 is composed of a first resin portion, and the second resin layer 22 is composed of a second resin portion.

Further, the interlayer film 30 having the first to third resin layers 21, 22, and 23, is disposed such that, as illustrated in Fig. 3, the first and third resin layers 21 and 23 are adhered to the organic glass 11 and the inorganic glass 12, respectively. However, the first and third resin layers 21 and 23 may be disposed so as to be adhered to the inorganic glass 12 and the organic glass 11, respectively.

(Single-layer structure)

The interlayer film having a single-layer structure will now be described in detail.

In the present invention, the interlayer film having a single-layer structure has a phase-separated structure constituted by a first phase and a second phase. The first phase is composed of the first resin portion, and the second phase is composed of the second resin portion. An interlayer film having a single-layer structure can effectively suppress warpage and foaming by satisfying requirements (I) and (II) for the first resin portion and the second resin portion. The phase-separated structure is preferably a sea-island structure. For example, the first resin portion may be the island portion and the second resin portion may be the sea portion.

The first resin constituting the first phase may be appropriately selected and used from among the resins described above, but an acrylic resin is preferable. By using an acrylic resin, the storage modulus (G1') of the first resin portion can be easily adjusted to within the above-described desired range, and the product (kG1') can also be reduced.

On the other hand, as the second resin constituting the second phase, it is preferable to use a resin other than the acrylic resin among the above-described resins, and more preferable to use a polyvinyl acetal resin. That is, for the single-layer structure, it is more preferable to use an acrylic resin as the first resin and a polyvinyl acetal resin as the second resin. When a polyvinyl acetal resin is used as the second resin, it is easier to increase the storage modulus (G2'), and foaming is less likely to occur. Further, as the polyvinyl acetal resin, as described later, PVB is particularly preferable.

In the interlayer film having a single-layer structure, based on the total amount of resin included in the interlayer film, the content of the first resin is preferably 50% by mass or more and 97% by mass or less, and the content of the second resin is preferably 3% by mass or more and 50% or less. When the content of each of the first and second resins is within these ranges, warpage and foaming can be effectively suppressed. Further, more preferably the content of the first resin is 65% by mass or more and 93% by mass or less and the content of the second resin is 7% by mass or more and 35% by mass or less, and further preferably the content of the first resin is 75% by mass or more and 90% by mass or less and the content of the second resin is 10% by mass or more and 25% by mass or less.

In the interlayer film having a single-layer structure, the first and second resins constitute the main component, and the total content of the first and second resins in the interlayer film is, based on the total amount of the interlayer film, usually 75% by mass or more, preferably 85% by mass or more, and more preferably 95% by mass or more. The upper limit of the total content of the first and second resins is not particularly limited, and is 100% by mass.

Further, the first resin included in the interlayer film having a single-layer structure is preferably a resin cured by active energy rays. When the first resin is a resin that is aged (e.g., polymerized) by active energy rays, it is not necessary to heat during the curing of the first resin, and therefore performance deterioration due to a thermal history can be prevented.

Further, when the interlayer film has a single-layer structure, as described later, it is preferable to cure a precursor of the first resin by energy rays in the presence of the second resin. As described above, when the precursor of the first resin is aged by the energy rays in the presence of the second resin, deterioration of the second resin due to heating is prevented. In addition, a sea-island structure having the second resin portion as the sea portion and the first resin portion as the island portion more easily formed.

The precursor of the first resin becomes the first resin by irradiating with active energy rays to carry out polymerization. The precursor may be a polymer or an oligomer having a lower degree of polymerization than the first resin, but generally a monomer is used.

In the single-layer structure, the storage moduli (G1') and (G2') of the first and second resin portions may be measured by providing the same composition as each of the first and second resin portions, forming the compositions into a membrane (film), and using samples formed into such a film to measure the modulus. When the interlayer film is produced by forming a membrane and then curing, the sample may be produced by using the same method to form a membrane and then curing under the same conditions.

More specifically, when producing the interlayer film by curing a precursor of the first resin with energy rays, as described later, in some cases the cured resin material may include, in addition to the precursor of the first resin, a second resin as well as a plasticizer, a photopolymerization initiator, other additives, and the like. In such an embodiment, the plasticizer, photopolymerization initiator, other additives, and the like, which are described later, are generally mixed with the first resin to form a first resin portion (first phase). Therefore, it is advisable to produce a film having the same composition as that of the first resin portion by mixing the optionally-added plasticizer, photopolymerization initiator, other additives, and the like with the first resin to form a membrane, and irradiate with active energy rays under the same conditions as those used when producing the interlayer film.

On the other hand, for the second resin portion, it is advisable to measure the storage modulus by producing a film of the second resin alone. Alternatively, when an additive or the like is to be contained in the second resin portion by adding the additive or the like to the second resin portion in advance, it is advisable to measure the storage modulus by producing a film constituted by the second resin and the additive or the like. Further, the thickness of the film-like sample may be the same as that of the interlayer film.

Other than cases where the interlayer film is produced by curing the precursor of the resin with energy rays, it is advisable to produce the sample in the same manner even when producing the interlayer film by curing with heat or humidity.

(Multilayer structure)

In an interlayer film having a multilayer structure, one or more of the plurality of resin layers may be a layer composed of a first resin portion, and another one or more of the layers may be a layer composed of a second resin portion. More specifically, as illustrated in Fig. 2, when the interlayer film is an interlayer film 20 having first and second resin layers 21 and 22, the first resin layer 21 may be composed of the first resin portion, and the second resin layer 22 may be composed of the second resin portion.

Further, as illustrated in Fig. 3, when the interlayer film is an interlayer film 30 having first, second, and third resin layers 21, 22, and 23, the first resin layer 21 may be composed of a first resin portion, and each of the second and third resin layers 22 and 23 may be composed of a second resin portion. The compositions of the second resin portions constituting each of the second and third resin layers 22 and 23 may be the same as each other or may be different from each other, but are preferably the same.

When the interlayer film has a multilayer structure, the first resin constituting the first resin portion (e.g., the first resin layer) may be selected and used from among the resins listed above. The first resin used for the first resin portion is preferably at least one selected from an acrylic resin, a polyvinyl acetal resin, and a polyurethane resin, and more preferably at least one selected from an acrylic resin and a polyvinyl acetal resin. It is particularly preferable to use an acrylic resin and a polyvinyl acetal resin in combination. Using an acrylic resin and a polyvinyl acetal resin makes it easier to adjust the storage modulus (G1') of the first resin portion to within the desired range, and it is easier to suppress warpage and cells. Further, it is preferable to use PVB as the polyvinyl acetal resin.

When two or more types of resin are used in each of the layers constituted by the first resin portion (e.g., the first resin layer), the layers preferably have a phase-separated structure, such as a sea-island structure. For example, when an acrylic resin and a polyvinyl acetal resin are used in combination, the acrylic resin is preferably the island portion and the polyvinyl acetal resin is the sea portion.

When an acrylic resin and a polyvinyl acetal resin are used in combination in each layer constituted by the first resin portion, based on the total amount of resin included in each of those layers, the acrylic resin content is 50% by mass or more and 97% by mass or less, and the content of the polyvinyl acetal resin is preferably 3% by mass or more and 50% by mass or less. When the content of the acrylic resin and the content of the polyvinyl acetal resin are within these ranges, it is easier to adjust the storage modulus (G1') of the first resin portion to within the desired range, and the occurrence of warpage and foaming can be effectively suppressed. From these viewpoints, more preferably the content of the acrylic resin is 65% by mass or more and 93% by mass or less and the content of the polyvinyl acetal resin is 7% by mass or more and 35% by mass or less, and further preferably the content of the acrylic resin is 75% by mass or more and 90% by mass and the content of the polyvinyl acetal resin is 10% by mass or more and 25% by mass or less.

The resin constituting each layer constituted by the second resin portion (e.g., the second layer or each of the second and the third layer) may also be selected and used from among the resins listed above. The second resin used for each layer constituted by the second resin portion is preferably at least one selected from an acrylic resin and a polyvinyl acetal resin, and it is particularly preferable to use an acrylic resin and a polyvinyl acetal resin in combination in each layer. Using an acrylic resin or a polyvinyl acetal resin makes it easier to adjust the storage modulus (G2') of the second resin portion to within the desired range, and it is easier to suppress the occurrence of warpage and cells. In the second layer portion of the interlayer film having a multilayer structure, it is preferable to use PVB as the polyvinyl acetal resin.

When two or more types of resin are used in each of the layers constituted by the second resin portion (e.g., the second layer or each of the second and the third layer) are used in combination, the interlayer film preferably has in each of the layers a phase-separated structure, such as a sea-island structure. For example, when an acrylic resin and a polyvinyl acetal resin are used in combination, the acrylic resin is preferably the island portion and the polyvinyl acetal resin is the sea portion.

When an acrylic resin and a polyvinyl acetal resin are used in combination in each layer constituted by the second resin portion, based on the total amount of resin in each of those layers, the acrylic resin content is 50% by mass or more and 97% by mass or less, and the content of the polyvinyl acetal resin is preferably 3% by mass or more and 50% by mass or less. When the content of the acrylic resin and the content of the polyvinyl acetal resin are within these ranges, it is easier to adjust the storage modulus (G2') of the second resin portion to within the desired range, and warpage and foaming tends to be effectively suppressed. From these viewpoints, more preferably the content of the acrylic resin is 65% by mass or more and 93% by mass or less and the content of the polyvinyl acetal resin is 7% by mass or more and 35% by mass or less, and further preferably the content of the acrylic resin is 75% by mass or more and 90% by mass and the content of the polyvinyl acetal resin is 10% by mass or more and 25% by mass or less.

As described above, in the multilayer structure, the first resin constituting the first resin portion and the second resin constituting the second resin portion are both preferably composed of a mixture of an acrylic resin and a polyvinyl acetal resin. In such a case, the composition, amount, and the like of the first resin and the second resin may be appropriately adjusted so as to satisfy the above requirements (I) and (II). More specifically, the first resin and the second resin may be made to satisfy the above requirements (I) and (II) by having at least one difference from each other in terms of the type or amount of the acrylic monomer constituting the acrylic resin (acrylic polymer), the degree of polymerization of the polyvinyl acetal resin, the mass rate between the polyvinyl acetal resin and the acrylic monomer, and the like.

In the interlayer film having a multilayer structure, each layer constituted by the first resin portion has the first resin as a main component. The content of the first resin in each layer is, based on the total amount of the interlayer film, usually 75% by mass or more, preferably 85% by mass or more, and more preferably 95% by mass or more. Further, the upper limit of the total content of the first resin is not particularly limited, and is 100% by mass.

Similarly, each layer constituted by the second resin portion has the second resin as a main component. The content of the second resin in each layer is, based on the total amount of the interlayer film, usually 75% by mass or more, preferably 85% by mass or more, and more preferably 95% by mass or more. The upper limit of the total content of the second resin is not particularly limited, and is 100% by mass.

In an interlayer film having a multilayer structure, a rate (A/B) of a total thickness (B) of the layers constituting the second resin portion to the total thickness (A) of the layers constituting the first resin portion is preferably 1/9 or more and 9/1 or less, preferably 3/7 or more and 7/3 or less, and preferably 4/6 or more and 6/4 or less.

Specifically, the total thickness of the layers constituting the first resin portion is, for example, 15 μm or more and 1.6 mm or less, preferably 50 μm or more and 1.2 mm or less, and more preferably 0.2 mm or more and 1.0 mm or less.

Further, the total thickness of the layers constituting the second resin portion is, for example, 15 μm or more and 1.6 mm or less, preferably 50 μm or more and 1.2 mm or less, and more preferably 0.2 mm or more and 1.0 mm or less.

In the multilayer structure, the storage moduli (G1') and (G2') of the first and second resin portions can be measured by separating the interlayer film into each resin layer and measuring the storage modulus of a film-like sample composed of each of the separated resin layers.

Further, a sample having the same composition as each layer may be provided and formed into a membrane (film), and the storage modulus of each of those samples may be measured using those film-like samples. It is also noted that in the case of producing the interlayer film by performing the curing after forming as a membrane, when producing the samples, it is advisable to cure under the same conditions after forming into a membrane by the same method.

Next, specific examples of the resin used for the interlayer film of the present invention will be described in more detail. In the following description, unless stated otherwise, the resins that can be used for the first and second resins constituting the first and second resin portions are collectively described.

(Acrylic resin)

The acrylic resin used in the present invention is an acrylic polymer. The acrylic polymer is a homopolymer of an acrylic monomer having a (meth)acryloyl group in the molecule, or a copolymer containing an acrylic monomer as a monomer unit. In each of the first resin portion and the second resin portion, the acrylic polymer may be used alone or in combination of two or more thereof.

When the interlayer film of the present invention contains an acrylic resin, the storage moduli (G1') and (G2') of the first resin portion and the second resin portion can be adjusted by appropriately selecting the type of acrylic monomer.

It is also noted that in this specification, "(meth)acryloyl group" means an acryloyl group or methacryloyl group, "(meth)acrylate" means an acrylate or methacrylate, and other similar terms are also the same.

The acrylic monomer constituting the acrylic polymer is usually a monofunctional monomer having one (meth)acryloyloxy group. Examples of such an acrylic monomer include an alkyl (meth)acrylate, an alicyclic structure-containing (meth)acrylate, an aromatic ring-containing (meth)acrylate, and the like.

Further, the monofunctional acrylic monomer may be a monomer having a functional group (hereinafter, also referred to as "functional group-containing monomer"), such as a cyclic ether group, a hydroxyl group, a carboxyl group, an amino group, an amide group, a polyoxyethylene group, or an alkoxy group. Specific examples of the functional group-containing monomer include a cyclic ether group-containing (meth)acrylate, a hydroxyl group-containing (meth)acrylate, a carboxyl group-containing acrylic monomer, an amino group-containing acrylic monomer, an amide group-containing acrylic monomer, a polyoxyethylene group-containing acrylic monomer, an alkoxy-containing monomer, and the like.

The acrylic monomer may be used alone, but it is preferable to use two or more types in combination. By using two or more types in combination, the adhesive strength can be improved while adjusting the storage modulus to be within the desired range.

Examples of the alkyl (meth)acrylate include an alkyl (meth)acrylate having an alkyl group having 1 to 18 carbon atoms. Specific examples include methyl (meth)acrylate, ethyl (meth)acrylate, n-butyl (meth)acrylate, isobutyl (meth)acrylate, tert-butyl (meth)acrylate, n-pentyl (meth)acrylate, n-hexyl (meth)acrylate, n-octyl (meth)acrylate, isooctyl (meth)acrylate, 2-ethylhexyl (meth)acrylate, isodecyl (meth)acrylate, lauryl (meth)acrylate, myristyl (meth)acrylate, isomyristyl (meth)acrylate, stearyl (meth)acrylate, isostearyl (meth)acrylate, and the like. Among these, an alkyl (meth)acrylate having an alkyl group having 1 to 8 carbon atoms is preferable, and from the viewpoint of facilitating adjustment of the storage moduli (G1') and (G2') to within the desired range, an alkyl acrylate having an alkyl group having 1 to 8 carbon atoms is preferable.

Examples of the alicyclic structure-containing (meth)acrylate include cyclohexyl (meth)acrylate, isobornyl (meth)acrylate, dicyclopentanyl (meth)acrylate, and the like. Examples of the aromatic ring-containing (meth)acrylate include benzyl (meth)acrylate, phenoxyethyl (meth)acrylate, and the like. The alicyclic structure-containing (meth)acrylate and the aromatic ring-containing (meth)acrylate are (meth)acrylates that do not have the functional groups described above.

Examples of the cyclic ether group-containing (meth)acrylate include a (meth)acrylate having an epoxy ring, an oxetane ring, a tetrahydrofuran ring, a dioxolane ring, or a dioxane ring. Among these, from the viewpoint of adhesive strength and the like, a (meth)acrylate containing an epoxy ring or a dioxolane ring is preferable, and a dioxolane ring-containing (meth)acrylate is particularly preferable.

Examples of the epoxy ring-containing (meth)acrylate include glycidyl (meth)acrylate, 2-hydroxyethyl (meth)acrylate glycidyl ether, 3-hydroxypropyl (meth)acrylate glycidyl ether, 4-hydroxybutyl acrylate glycidyl ether, 5-hydroxypentyl (meth)acrylate glycidyl ether, 6-hydroxyhexyl (meth)acrylate glycidyl ether, and the like. Examples of the tetrahydrofuran ring-containing (meth)acrylate include tetrahydrofurfuryl (meth)acrylate, tetrahydrofurfuryl alcohol acrylic acid multimer ester, and the like.

Examples of the dioxolane ring-containing (meth)acrylate include (2-methyl-2-ethyl- 1,3-dioxolane-4-yl)methyl (meth)acrylate, (2,2-cyclohexyl-1,3-dioxolane-4-yl)methyl (meth)acrylate, (2,2-dimethyl-1,3-dioxolane-4-yl)methyl (meth)acrylate, (2-methyl-2-isobutyl-1,3-dioxolane-4-yl)methyl (meth)acrylate, and the like.

Preferable specific examples of the cyclic ether group-containing (meth)acrylate are glycidyl (meth)acrylate and (2-methyl-2-ethyl-1,3-dioxolane-4-yl)methyl (meth)acrylate, but (2-methyl-2-ethyl-1,3-dioxolane-4-yl)methyl (meth)acrylate is more preferable.

Examples of the carboxyl group-containing acrylic monomer include acrylic acid, methacrylic acid, ω-carboxy-polycaprolactone mono(meth)acrylate, β -carboxyethyl (meth)acrylate, 2-(meth)acryloyloxyethyl phthalic acid (e.g., CAS: 30697-40-6), 2- (meth)acrylicyloxyethyl hexahydrophthalic acid (e.g., CAS: 57043-35-3), and the like. The number of repeating units of polycaprolactone in the ω-carboxy-polycaprolactone mono(meth)acrylate is about 2 to 5, and is preferably 2 to 3. The carboxyl group-containing acrylic monomer is preferably ω-carboxy-polycaprolactone mono(meth)acrylate.

Examples of the hydroxyl group-containing acrylic monomer include 2-hydroxyethyl (meth)acrylate, 3-hydroxypropyl (meth)acrylate, 4-hydroxybutyl (meth)acrylate, and the like.

Examples of the amino group-containing acrylic monomer include N,N-dimethylaminoethyl (meth)acrylate, N,N-dimethylaminoethyl (meth)methacrylate, N,N-diethylaminoethyl (meth)acrylate, and the like.

Examples of the amide group-containing monomer include N,N-dimethyl (meth)acrylamide, N-isopropyl (meth)acrylamide, N,N-diethyl (meth)acrylamide, N-hydroxyethyl (meth)acrylamide, and the like.

Examples of the polyoxyethylene-containing (meth)acrylate include diethylene glycol monoethyl ether (meth)acrylate.

Examples of the alkoxy-containing monomer include 3-methoxybutyl (meth)acrylate.

As the acrylic monomer constituting the acrylic polymer, a polyfunctional acrylic monomer may be used in addition to the monofunctional acrylic monomer. Examples of the polyfunctional acrylic monomer include a polyfunctional (meth)acrylate.

Examples of the polyfunctional (meth)acrylate include 2,2-bis[4-((meth)acryloxyethoxy)phenyl]propane di(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(2-(meth)acryloyloxyethyl)phosphate, tetramethylolmethane tri(meth)acrylate, tetramethylolpropane tetra(meth)acrylate, ethylene glycol di(meth)acrylate, diethylene glycol di(meth)acrylate, tetraethylene glycol di(meth)acrylate, 1,6-hexanediol di(meth)acrylate, 1,9-nonanediol di(meth)acrylate, polytetramethylene glycol di(meth)acrylate, neopentyl glycol di(meth)acrylate, 1,3-butylene glycol di(meth)acrylate, and the like.

The acrylic monomer constituting the acrylic polymer preferably contains a functional group-containing monomer, and more preferably contains a cyclic ether group-containing (meth)acrylate as the functional group-containing monomer. In the present invention, using a cyclic ether group-containing (meth)acrylate for the acrylic polymer constituting the first resin, the acrylic polymer constituting the second resin, or for both of those enables the adhesive strength to be easily improved while adjusting the storage moduli (G1') and (G2') to within the desired range. Further, as the cyclic ether group-containing (meth)acrylate, it is more preferable to contain a dioxolane ring as described above.

In the monomers constituting the acrylic polymer, the content of the cyclic ether group-containing (meth)acrylate is, based on all the monomers constituting the acrylic polymer (hereinafter, simply referred to as "based on all the monomers"), preferably 8% by mass or more and 55% by mass or less, more preferably 12% by mass or more and 45% by mass or less, and further preferably 15% by mass or more and 35% by mass or less.

From the viewpoint of ensuring adhesive strength, the monomers constituting the acrylic polymer may contain, the functional group-containing monomer, another functional group-containing monomer in addition to the cyclic ether group-containing (meth)acrylate. Such a functional group monomer is not particularly limited, but a carboxyl group-containing acrylic monomer is preferable.

It is noted that it is more preferable to use the carboxyl group-containing acrylic monomer when the cyclic ether group-containing (meth)acrylate is an epoxy ring-containing (meth)acrylate. By using the carboxyl group-containing acrylic monomer and the epoxy ring-containing (meth)acrylate in combination, it is easier to improve the adhesive strength and the like.

When a carboxyl group-containing acrylic monomer is used for the acrylic polymer, the content of the carboxyl group-containing acrylic monomer in the monomers constituting the acrylic polymer is, based on all the monomers, preferably 25% by mass or less, more preferably 2% by mass or more and 20% by mass or less, and further preferably 5% by mass or more and 15% by mass or less.

Further, it is preferable that the monomers constituting the acrylic polymer contain, in addition to the above-described functional group-containing monomer, one or more selected from alkyl (meth)acrylate, an alicyclic structure-containing (meth)acrylate, and an aromatic ring-containing (meth)acrylate. The total content of the monomer(s) selected from these is, based on the total amount of the monomers, preferably 45% by mass or more and 92% by mass or less, more preferably 50% by mass or more and 88% by mass or less, and further preferably 55% by mass or more and 85% by mass or less.

By appropriately selecting these monomers, the storage modulus of each resin portion can be adjusted as appropriate. For example, the storage modulus can be made relatively high by using an alicyclic structure-containing (meth)acrylate such as cyclohexyl (meth)acrylate. On the other hand, the storage modulus can be made relatively low by using an alkyl (meth)acrylate, or an alkyl (meth)acrylate and an aromatic ring-containing (meth)acrylate.

Therefore, it is preferable to use an alkyl (meth)acrylate as the acrylic polymer used for the first resin portion. That is, it is more preferable that the monomers constituting the acrylic polymer used for the first resin portion contain a cyclic ether group-containing (meth)acrylate and an alkyl (meth)acrylate. By using an alkyl (meth)acrylate as the acrylic resin of the first resin portion, it is easier to improve the adhesive strength while adjusting the storage modulus (G1') to within the desired range as described above. In the acrylic polymer used for the first resin portion, the content of the alkyl (meth)acrylate is, based on all the monomers, preferably 25% by mass or more and 80% by mass or less, more preferably 30% by mass or more and 70% by mass or less, and further preferably 45% by mass or more and 65% by mass or less. In the acrylic polymer used for the first resin portion, the content of the cyclic ether group-containing (meth)acrylate is as described above.

Further, it is more preferable that the monomer constituting the acrylic polymer used for the first resin portion contains an aromatic ring-containing (meth)acrylate in addition to the alkyl (meth)acrylate. The content of the aromatic ring-containing (meth)acrylate is, based on all monomers, preferably 8% by mass or more and 40% by mass or less, more preferably 10% by mass or more and 35% by mass or less, and further preferably 15% by mass or more and 30% by mass or less.

As described above, the monomer constituting the acrylic polymer used for the second resin portion preferably includes a functional group-containing monomer such as a cyclic ether group-containing (meth)acrylate. In such a case, as described above, the monomer constituting the acrylic polymer used for the second resin portion preferably contains one or more selected from an alkyl (meth)acrylate, an alicyclic structure-containing (meth)acrylate, and an aromatic ring-containing (meth)acrylate, and the total content of these compounds is as described above. The content of the cyclic ether group-containing (meth)acrylate is also as described above.

The monomer constituting the acrylic polymer may be used in combination with a vinyl monomer other than an acrylic monomer in addition to the acrylic monomer having a (meth)acryloyl group in the molecule. The acrylic polymer may be polymerized by a solution polymerization method, a suspension polymerization method, or the like, but as described later, it is preferable to polymerize the acrylic polymer by irradiating it with active energy rays.

(Polyvinyl acetal resin)

The polyvinyl acetal resin is obtained by acetalizing polyvinyl alcohol with an aldehyde. Further, the polyvinyl alcohol can be obtained by saponifying a polyvinyl ester such as polyvinyl acetate, for example. The polyvinyl acetal resin may be used alone or in combination of two or more thereof.

As the polyvinyl alcohol, a polyvinyl alcohol having a saponification degree of 80 to 99.8 mol% is generally used. The average degree of polymerization of the polyvinyl alcohol is preferably 150 or more and 1500 or less in order to adjust the average degree of polymerization of the polyvinyl acetal resin to within a desired range. The average degree of polymerization of the polyvinyl alcohol is determined by a method carried out in accordance with JIS K6726 "Polyvinyl alcohol test method".

The number of carbon atoms of the acetal group included in the polyvinyl acetal resin is not particularly limited, but is preferably 1 to 10, more preferably 2 to 6, and further preferably 4. Specifically, as the acetal group, a butyral group is particularly preferable, and therefore, as the polyvinyl acetal resin, a polyvinyl butyral resin is preferable. The degree of acetalization of the polyvinyl acetal resin is preferably 40 mol% or more, and preferably 85 mol% or less. Further, the degree of acetalization is more preferably 60 mol% or more, and more preferably 75 mol% or less. By setting the degree of acetalization to within these ranges, it is easier to adjust the amount of hydroxyl groups to within a desired range, which is described later. The degree of acetalization means the degree of acetalization when the acetal group of the polyvinyl acetal resin is an acetoacetyl group, and means the degree of butyralization when the acetal group is a butyral group.

The amount of hydroxyl groups in the polyvinyl acetal resin is preferably 15 mol% or more, and preferably 35 mol% or less. By setting the amount of hydroxyl groups to 15 mol% or more, the adhesiveness of the interlayer film to the glass plates is good, and it is easier to improve the adhesive strength. Further, by setting the amount of hydroxyl groups to 35 mol% or less, it is possible to prevent the interlayer film from becoming hard and the storage moduli (G1') and (G2') from becoming too high.

From these viewpoints, the amount of hydroxyl groups in the polyvinyl acetal resin is more preferably 20 mol% or more, further preferably 25 mol% or more, and is more preferably 33 mol% or less.

The degree of acetylation (acetyl group amount) of the polyvinyl acetal resin is preferably 0.1 mol% or more, and preferably 20 mol% or less. When the degree of acetylation is equal to or more than the above lower limit value, compatibility with other resins such as acrylic resin tends to be good. Further, when the degree of acetylation is equal to or less than the above upper limit value, the moisture resistance of the interlayer film is increased. From these viewpoints, the degree of acetylation is more preferably 0.3 mol% or more, and further preferably 0.5 mol% or more, and more preferably 10 mol% or less, further preferably 5 mol% or less, and still further preferably 3 mol% or less.

The amount of hydroxyl groups, the degree of acetalization (degree of butyralization), and the degree of acetylation can be calculated from results measured by a method carried out in accordance with JIS K6728 "Polyvinyl butyral test method".

In each of the first and second resin portions, the storage modulus (G1') and the storage modulus (G2') can be adjusted by adjusting the average degree of polymerization of the polyvinyl acetal resin. For example, by lowering the average degree of polymerization, the storage modulus (G1') and the storage modulus (G2') can be easily lowered. As described above, the storage modulus (G1') is preferably lower than the storage modulus (G2'). Therefore, for example, when a polyvinyl acetal resin is used for both the first and second resin portions in a multilayer structure, the average degree of polymerization of each resin portion may be adjusted to make the storage modulus (G1') lower than the storage modulus (G2'). Specifically, to make the storage modulus (G1') lower than the storage modulus (G2'), the average degree of polymerization of the polyvinyl acetal resin used for the first resin portion may be set lower than the average degree of polymerization of the polyvinyl acetal resin used for the second resin portion.

The average degree of polymerization of the polyvinyl acetal resin used for the first resin portion is preferably 100 or more and 1500 or less. However, from the viewpoint of lowering the storage modulus (G1'), 900 or less is more preferable, 600 or less is further preferable, and 450 or less is still further preferable, and 150 or more is more preferable, 200 or more is further preferable, and 220 or more is still further preferable.

Further, although the average degree of polymerization of the polyvinyl acetal resin used for the second resin portion is preferably 100 or more and 1500 or less, from the viewpoint of more easily preventing warpage and foaming while adjusting the storage modulus (G2') to the desired range, 1300 or less is more preferable, 1100 or less is further preferable, and 900 or less is still further preferable. In addition, 150 or more is more preferable, 200 or more is further preferable, and 220 or more is still further preferable.

The average degree of polymerization of the polyvinyl acetal resin is the same as the average degree of polymerization of the polyvinyl alcohol used as a raw material, and can be determined based on the average degree of polymerization of the polyvinyl alcohol.

The aldehyde used in producing the polyvinyl acetal resin is not particularly limited, but in general an aldehyde having 1 to 10 carbon atoms is preferably used. The aldehyde having 1 to 10 carbon atoms is not particularly limited, and examples thereof may include formaldehyde, acetaldehyde, propionaldehyde, n-butyraldehyde, isobutylaldehyde, n-valeraldehyde, 2-ethylbutyraldehyde, n-hexylaldehyde, n-octylaldehyde, n-nonylaldehyde, n-decylaldehyde, benzaldehyde, and the like. Of these, an aldehyde having 2 to 6 carbon atoms, such as acetaldehyde, n-butyraldehyde, n-hexylaldehyde, and n-valeraldehyde, is preferable, and n-butyraldehyde is more preferable.

These aldehydes may be used alone or in combination of two or more thereof.

(Polyvinyl alcohol resin)

The polyvinyl alcohol resin (PVA) is obtained by polymerizing a vinyl ester, such as vinyl acetate, according to a conventionally known method to obtain a polymer, and then saponifying the polymer, that is, hydrolyzing it. One kind of PVA may be used, or two or more types may be used in combination.

The PVA may be an unmodified PVA or a modified PVA. Examples of the unmodified PVA include those obtained by saponifying polyvinyl ester. Examples of the modified PVA include a saponified polymer of a vinyl ester and another unsaturated monomer.

Examples of the other unsaturated monomer include a monomer other than a vinyl ester and having a carbon-carbon double bond such as a vinyl group. Specific examples may include an olefin, a (meth)acrylic acid and a salt thereof, a (meth)acrylic acid ester, an unsaturated acid other than a (meth)acrylic acid, salts and esters thereof, a (meth)acrylamide, an N-vinylamide, a vinyl ether, a nitrile, a vinyl halide, an allyl compound, a vinylsilyl compound, isopropenyl acetate, a sulfonic acid group-containing compound, an amino group-containing compound, and the like.

Examples of the olefin include ethylene, propylene, 1-butene, isobutene, and the like. Examples of the (meth)acrylic acid ester include methyl (meth)acrylate, ethyl (meth)acrylate, n-propyl (meth)acrylate, i-propyl (meth)acrylate, and n-butyl (meth)acrylate, 2-ethylhexyl (meth)acrylate, and the like.

Examples of the unsaturated acid other than a (meth)acrylic acid, salts and esters thereof include maleic acid and a salt thereof, a maleic acid ester, itaconic acid and a salt thereof, an itaconic acid ester, methylenemalonic acid and a salt thereof, a methylenemalonic acid ester, and the like.

Examples of the (meth)acrylamide include acrylamide, n-methylacrylamide, N-ethylacrylamide, N,N-dimethylacrylamide, and the like. Examples of the N-vinylamide include N-vinylpyrrolidone and the like. Examples of the vinyl ether include methyl vinyl ether, ethyl vinyl ether, n-propyl vinyl ether, i-propyl vinyl ether, n-butyl vinyl ether, and the like.

Examples of the nitrile include (meth)acrylonitrile and the like. Examples of the vinyl halide include vinyl chloride, vinylidene chloride, and the like. Examples of the allyl compound include allyl acetate, allyl chloride, and the like. Examples of the vinylsilyl compound include vinyltrimethoxysilane and the like.

Examples of the sulfonic acid group-containing compound include a (meth)acrylamide alkane sulfonic acid, such as (meth)acrylamide propane sulfonic acid, and a salt thereof, an olefin sulfonic acid such as ethylene sulfonic acid, allyl sulfonic acid, and methallyl sulfonic acid, or a salt thereof, and the like.

Examples of the amino group-containing compound include allylamine, polyoxyethylene allylamine, polyoxypropylene allylamine, polyoxyethylene vinylamine, polyoxypropylene vinylamine, and the like.

Further, as the modified PVA, a modified PVA obtained by adding a carboxyl group, a sulfonic acid group, an amino group, a pyrrolidone group, or the like to the PVA by graft polymerization or the like may be used.

(Polyurethane resin)

Examples of the polyurethane resin include a polyurethane obtained by reacting an isocyanate compound with a diol compound, a polyurethane obtained by reacting an isocyanate compound with a diol compound and a chain length extender such as a polyamine, and the like. Further, the polyurethane resin may contain a sulfur atom. In that case, some or all of the above diols may be selected from a polythiol and a sulfur-containing polyol. By using a polyurethane resin, the adhesiveness to organic glass tends to be improved.

(Ethylene-vinyl acetate copolymer resin)

The ethylene-vinyl acetate copolymer resin may be a non-crosslinked ethylene-vinyl acetate copolymer resin or a high-temperature crosslinked ethylene-vinyl acetate copolymer resin. Further, as the ethylene-vinyl acetate copolymer resin, an ethylene-vinyl acetate modified resin such as an ethylene-vinyl acetate copolymer saponified product and an ethylene-vinyl acetate hydrolyzate can also be used.

The ethylene-vinyl acetate copolymer resin preferably has a vinyl acetate content of 10 to 50% by mass, and more preferably 20 to 45% by mass, as measured in accordance with JIS K 6730 "Ethylene-vinyl acetate resin test method". By setting the vinyl acetate content to be no less than these lower limit values, the adhesive strength tends to be increased and the penetration resistance of the laminated glass tends to be improved. Further, by setting the vinyl acetate content to be no more than these upper limit values, the breaking strength of the interlayer film for laminated glass is increased, and the impact resistance of the laminated glass is improved.

(Ionomer resin)

The ionomer resin is not particularly limited, and various ionomer resins can be used. Specific examples thereof include an ethylene-based ionomer, a styrene-based ionomer, a perfluorocarbon-based ionomer, a telechelic ionomer, a polyurethane ionomer, and the like. Among these, an ethylene-based ionomer is preferable because the laminated glass has good mechanical strength, durability, transparency, and the like, and has excellent adhesiveness to glass.

As the ethylene-based ionomer, an ethylene/unsaturated carboxylic acid copolymer ionomer is preferably used because it has excellent transparency and toughness. The ethylene/unsaturated carboxylic acid copolymer is a copolymer having at least a structural unit derived from ethylene and a structural unit derived from an unsaturated carboxylic acid, and may have a structural unit derived from another monomer.

Examples of the unsaturated carboxylic acid include acrylic acid, methacrylic acid, maleic acid and the like. Acrylic acid and methacrylic acid are preferable, and methacrylic acid is particularly preferable. Further, examples of the other monomer include acrylic acid ester, methacrylic acid ester, 1-butene, and the like.

As the ethylene/unsaturated carboxylic acid copolymer, when all the structural units of the copolymer are taken to be 100 mol%, it is preferable that 75 to 99 mol% of the structural units are derived from ethylene and 1 to 25 mol% of the structural units are derived from an unsaturated carboxylic acid.

The ionomer of the ethylene/unsaturated carboxylic acid copolymer is an ionomer resin obtained by neutralizing or crosslinking at least a part of the carboxyl groups of the ethylene/unsaturated carboxylic acid copolymer with a metal ion. The degree of neutralization of the carboxyl groups is usually 1 to 90%, and preferably 5 to 85%.

Examples of the ion source in the ionomer resin include an alkali metal such as lithium, sodium, potassium, rubidium, and cesium, and a polyvalent metal such as magnesium, calcium and zinc. Sodium or zinc is preferable.

The method for producing the ionomer resin is not particularly limited, and the ionomer resin can be produced by a conventionally known production method. For example, in the case of using an ionomer of an ethylene/unsaturated carboxylic acid copolymer as the ionomer resin, for example, the ethylene/unsaturated carboxylic acid copolymer is produced by subjecting ethylene and the unsaturated carboxylic acid to radical copolymerization at high temperature and high pressure. Then, an ionomer of the ethylene/unsaturated carboxylic acid copolymer can be produced by reacting the ethylene/unsaturated carboxylic acid copolymer with a metal compound including the above-described ion source.

(Plasticizer)

The interlayer film may further contain a plasticizer in addition to the first and second resins. The interlayer film is more flexible when it contains a plasticizer, and can also have higher adhesiveness to glass and the like. However, the interlayer film of the present invention preferably does not contain a plasticizer, or even if it contains a plasticizer, only a small amount. When a plasticizer is not contained or is only contained in a small amount, problems such as the plasticizer migrating from the interlayer film to the organic glass and causing cloudiness in the organic glass can be prevented.

Further, in the present invention, even if the amount of plasticizer is small, as described above, for example, by using an acrylic resin together with a resin other than the acrylic resin, such as polyvinyl acetal resin, the interlayer film can have better adhesive strength while also having flexibility.

The content of the plasticizer in the interlayer film is, per 100 parts by mass of the resin included in the whole interlayer film, for example, 0 parts by mass or more and less than 10 parts by mass, preferably 5 parts by mass or less, more preferably 3 parts by mass or less, further preferably 1 part by mass or less, and most preferably 0 parts by mass. That is, it is most preferable for the interlayer film to not contain a plasticizer.

Further, when the interlayer film has a multilayer structure (that is, when it has a plurality of resin layers), some of the resin layers may contain a plasticizer and the other resin layers may not contain a plasticizer. Further, the content of the plasticizer in each resin layer may be different.

For example, as illustrated in Fig. 3, when the interlayer film contains first, second, and third resin layers 21, 22, and 23, the content of the plasticizer per 100 parts by mass of the resin in the first resin layer 21 may be larger than the content of the plasticizer per 100 parts by mass of the resin in the second and third resin layers 22 and 23. Further, the plasticizer may be contained only in the first resin layer 21, and the plasticizer may not be contained in the second and third resin layers 22 and 23. According to these configurations, even if the first resin layer 21 (core layer) contains a relatively large amount of plasticizer, the presence of the second and third resin layers 22 and 23 (skin layers) makes it difficult for the plasticizer to migrate to the surface of the interlayer film, which means that cloudiness is less likely to occur in the organic glass.

In addition, from the same viewpoint, when the interlayer film has a multilayer structure, the resin layer in contact with the organic glass may not contain the plasticizer, and the other resin layers may contain the plasticizer, or the content of the plasticizer per 100 parts by mass of the resin in the resin layer in contact with the organic glass may be less than the content of the plasticizer per 100 parts by mass of the resin in the other resin layers.

Examples of the plasticizer include an organic ester plasticizer, a phosphate plasticizer such as an organic phosphate plasticizer and an organic phosphite plasticizer, and the like. The plasticizer may be used alone or in combination of two or more thereof. Among these, an organic ester plasticizer is preferable. Examples of the organic ester plasticizer include a monobasic organic acid ester and a polybasic organic acid ester.

Examples of the monobasic organic acid ester include an ester of a glycol and a monobasic organic acid. Examples of the glycol include a polyalkylene glycol in which each alkylene unit has 2 to 4 carbon atoms, and preferably 2 or 3 carbon atoms, and the number of repetitions of the alkylene unit is 2 to 10, and preferably 2 to 4. Further, the glycol may be a monoalkylene glycol having 2 to 4 carbon atoms, and preferably 2 or 3 carbon atoms (that is, there is one repeating unit).

Specific examples of the glycol include ethylene glycol, diethylene glycol, triethylene glycol, tetraethylene glycol, propylene glycol, dipropylene glycol, tripropylene glycol, tetrapropylene glycol, butylene glycol, and the like.

Examples of the monobasic organic acid include an organic acid having 3 to 10 carbon atoms. Specific examples include butyric acid, isobutyric acid, caproic acid, 2-ethylbutyric acid, heptyl acid, n-octyl acid, 2-ethylhexylic acid, n-nonyl acid, decyl acid, and the like.

Specific examples of the monobasic organic acid include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapriate, triethylene glycol di-n-heptanoate, tetraethylene glycol di-n-heptanoate, triethylene glycol di -2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, and the like.

Further, examples of the polybasic organic acid ester include an ester compound of a dibasic organic acid having 4 to 12 carbon atoms, such as adipic acid, sebacic acid, and azelaic acid, and an alcohol having 4 to 10 carbon atoms. The alcohol having 4 to 10 carbon atoms may have a linear structure, a branched structure, or a cyclic structure.

Specific examples thereof include dibutyl sebacate, dioctyl azelaate, dihexyl adipate, dioctyl adipate, hexylcyclohexyl adipate, diisononyl adipate, heptylnonyl adipate, dibutylcarbitol adipate, and a mixed adipate ester. Further, an oil-modified sebacic acid alkyd and the like may be used. Examples of the mixed adipate ester include an adipate ester produced two or more alcohols selected from an alkyl alcohol having 4 to 9 carbon atoms and a cyclic alcohol having 4 to 9 carbon atoms.

Examples of the organic phosphate plasticizer include a phosphoric acid ester such as tributoxyethyl phosphate, isodecylphenyl phosphate, and triisopropyl phosphate.

Among the examples mentioned above, triethylene glycol-di-2-ethylhexanoate (3GO) is particularly preferably used as the plasticizer.

(Photopolymerization initiator)

When the interlayer film of the present invention includes a resin cured by active energy rays, it is preferable to add a photopolymerization initiator. Examples of the photopolymerization initiator include an acetophenone compound such as benzophenone, $\alpha$-aminoalkylphenone, and $\alpha$-hydroxyalkylphenone, an acylphosphine oxide compound, a titanosen compounds, an oxime ester compound, a benzoin ether compound, thioxanthone and the like. Of these, an acetophenone compound is preferred.

Among the above-described photopolymerization initiators, examples of commercially available products include IRGACURE 184, IRGACURE 369, IRGACURE 379, IRGACURE 379EG, IRGACURE 651, IRGACURE 784, IRGACURE 819, IRGACURE 907, IRGACURE 2959, IRGACURE OXE 01, and Lucirin TPO (all manufactured by BASF), benzoin methyl ether, benzoin ethyl ether, and benzoin isopropyl ether (all manufactured by Tokyo Chemical Industry Co., Ltd.), and the like.

The photopolymerization initiator may be used alone or in combination of two or more thereof.

When the interlayer film has a single-layer structure, the photopolymerization initiator may be blended in the interlayer film composed of the single layer. On the other hand, when the interlayer film has a multilayer structure, the photopolymerization initiator may be blended in a resin layer containing a resin cured by active energy rays.

The blending amount of the photopolymerization initiator in the polymer film is, in each layer, per 100 parts by mass of the resin cured by active energy rays, preferably 0.1 parts by mass or more and 10 parts by mass or less, and more preferably 0.5 parts by mass or more and 5 parts by mass or less. By setting the blending amount of the photopolymerization initiator to be no less than these lower limit values, the photocurability of a first component is good. Further, by setting the blending amount to be no more than these upper limit values, a photocurability corresponding to the blending amount can be exhibited.

(Other additives)

When the interlayer film includes a resin cured by active energy rays as a resin, a chain transfer agent may be blended in the layer including the resin. The chain transfer agent is not particularly limited, and examples thereof may include a mercapto compound such as pentaerythritol tetrakis(3-mercaptobutyrate). When a chain transfer agent is used, it is possible to suppress an increase in the molecular weight of the resin cured by active energy rays, which allows the storage modulus (G1') or storage modulus (G2') in the layer to be lowered.

In addition to the chain transfer agent, various other additives may also be added to the interlayer film. Specific examples thereof include an ultraviolet absorber, an infrared absorber, an antioxidant, a light stabilizer, an adhesive strength modifier, a pigment, a dye, a fluorescent whitening agent, a crystal nucleating agent, and the like. When the interlayer film has a multilayer structure, the type and blending amount of the additive may be different for each layer, or may be the same for all layers.

<Method for producing interlayer film>

(Method for producing an interlayer film having a single-layer structure)

Next, a method for producing the interlayer film will be described. In the description of methods for producing the interlayer film, a method for producing an interlayer film having a single-layer structure will be described first. In the following, an embodiment is described in detail for a case in which a first resin contained in the interlayer film is a resin cured by active energy rays.

In the method for producing an interlayer film according to one embodiment of the present invention, it is advisable to first prepare a curable resin material for forming the interlayer film. In one embodiment of the invention, the curable resin material contains a precursor of the first resin. Further, the curable resin material preferably contains a second resin in addition to the precursor of the first resin. In addition, the curable resin material preferably contains a photopolymerization initiator, and may optionally further contain other additives. The curable resin material is usually a liquid.

Further, in the present invention, as described above, it is preferable that the first resin be an acrylic resin.

When the first resin is an acrylic resin, as the precursor of the first resin to be blended in the curable resin material, it is preferable to use a monomer component constituting an acrylic polymer such as an acrylic monomer. When the precursor of the first resin is a monomer component, the monomer component is polymerized to become a polymer by irradiating with active energy rays, as described later. In addition, as the second resin to be blended in the curable resin material, a resin other than the acrylic resin may be used, but preferably a polyvinyl acetal resin is used. The second resin, such as a polyvinyl acetal resin, may be blended in the curable resin material in an already-polymerized form.

In this production method, by mixing the second resin with the precursor of the first resin, it is easier to form a phase-separated structure such as a sea-island structure in the interlayer film.

The method for preparing the curable resin material is not particularly limited, and may be carried out by mixing in a mixer, in addition to the precursor of the first resin, the second resin, photopolymerization initiator, plasticizer, and other additives to be optionally blended. Further, a solvent may optionally be added to the curable resin material, and the curable resin material may also be diluted with a solvent. When diluting with a solvent, it is advisable to remove the solvent by drying or the like before, for example, irradiating with active energy rays as described later.

The mixer is not particularly limited, but a known stirrer such as a rotation/revolution mixer or a stirrer equipped with a stirrer blade can be used.

The curable resin material prepared as described above may then be formed into a membrane. The method for forming the curable resin material into a membrane is not particularly limited, but the curable resin material may be coated onto a base material or a release film that has been subjected to a release treatment.

Further, the curable resin material in a membrane may be formed between two substrates by coating or the like a curable resin material on a base material disposed on a substrate or a release film subjected to a release treatment and then placing another substrate on the substrate via a spacer or the like. As a result, a cured product of the curable resin material (that is, the interlayer film) has a thickness corresponding to the height of the spacer. In addition, a base material, a release film that has undergone a release treatment, or the like may be disposed on the surface of another substrate that is in contact with the curable resin material. At least one of the two substrates transmits active energy rays, and a glass plate is usually used.

Next, the curable resin material formed in a membrane is irradiated with active energy rays. The active energy rays are not limited as long as the first resin can be cured. Examples thereof include ionizing radiation such as ultraviolet rays, electron beams, α rays, β rays, and γ rays. Among these, ultraviolet rays (UV) are particularly preferable from the viewpoint of curability and convenience. The active energy rays may be irradiated from one side of the curable resin material formed in a membrane (that is, one side of the substrate), or both sides of the curable resin material (that is, both sides of the substrate).

By appropriately adjusting the irradiation amount of the active energy rays, the degree of curing (degree of polymerization) of the first resin contained in the curable resin material can be adjusted, which enables the storage modulus of the first resin portion (G1') to also be adjusted. Specifically, when the irradiation amount of the active energy rays is increased, the degree of polymerization of the first resin is increased and the storage modulus (G1') is increased. Further, when the irradiation amount of the active energy rays is reduced, the degree of polymerization of the first resin is lowered, and the storage modulus (G1') is reduced.

The irradiation amount of the active energy rays is not particularly limited, but from the viewpoint of making it easier to adjust the storage modulus (G1') and the product (kG1') to be within the desired range, is preferably 100 mJ/cm$^2$ or more and 15000 mJ/cm$^2$ or less, and more preferably 500 mJ/cm$^2$ or more and 3000 mJ/cm$^2$ or less.

By irradiating with active energy rays to cure the first resin, an interlayer film in which the first resin portion and the second resin portion are phase-separated can be obtained. When a base material or a release film is laminated on the obtained interlayer film, they may be appropriately peeled off from the interlayer film.

The method for producing the interlayer film having a single-layer structure is not limited to the method described above, and any other method may be used. For example, the first and second resins and the other additives to be optionally blended may be kneaded to obtain a resin composition, and then the obtained resin composition is extruded, press-formed, or the like to obtain the interlayer film. In this case, the first and second resins may be polymerized in advance. Therefore, even in the case where the first resin is a resin cured by the active energy rays, a precursor of the first resin is aged(polymerized) in advance by irradiating with active energy rays or the like, and the first resin obtained by such curing (polymerization) may be mixed with the other components.

(Method of producing interlayer film having multilayer structure)

The method for producing the interlayer film having a multilayer structure can be carried out by laminating a plurality of resin layers produced in advance. The method for producing each resin layer is not particularly limited, but when the resin constituting a resin layer contains two or more components, the resin layer may be produced by the same method as that described above for the interlayer film having a single-layer structure.

When the resin constituting a resin layer is composed of one component, for example, the resin and other optionally-added additives may be kneaded to obtain a resin composition, and the obtained resin composition may be extruded, press-formed, or the like to produce the resin layer.

Further, for example, a precursor of the resin and the other additives to be optionally blended may be mixed to produce a curable resin material, and the curable resin material may be formed into a membrane and cured.

The method for forming the curable resin material into a membrane and the curing method may be carried out by the methods illustrated for the method described above for producing an interlayer film having a single-layer structure.

[Inorganic glass]

The inorganic glass used in the present invention is composed of an inorganic glass plate. Examples of the inorganic glass include, but are not particularly limited to, float plate glass, tempered glass, colored glass, polished plate glass, template glass, meshed plate glass, wire plate glass, UV absorbing plate glass, infrared reflecting plate glass, infrared absorbing plate glass, green glass, and the like. The inorganic glass may be subjected to a surface treatment.

The thickness (Ta) of the inorganic glass is not particularly limited, but is preferably 0.1 mm or more, and more preferably 1.0 mm or more, and is preferably 5.0 mm or less, and more preferably 3.2 mm or less.

The linear expansion coefficient (Ca) of the inorganic glass is not particularly limited, but is preferably $6.0 \times 10^{-6}$ $K^{-1}$ or more, and more preferably $8.0 \times 10^{-6}$ $K^{-1}$ or more, and is preferably $1.5. \times 10^{-5}$ $K^{-1}$ or less, and more preferably $9.5 \times 10^{-6}$ $K^{-1}$ or less. The linear expansion coefficient of inorganic glass can be measured by JISR 3102.

For the inorganic glass, the value of the coefficient (k) may be adjusted to within the desired range by setting the thickness and the linear expansion coefficient within these desired ranges.

[Organic glass]

The organic glass used in the present invention is composed of an organic glass plate. Examples of the organic glass include, but are not particularly limited to, a polycarbonate plate, a polymethyl methacrylate plate, an acrylonitrile styrene copolymer plate, an acrylonitrile butadiene styrene copolymer plate, a polyester plate, a fluororesin plate, a polyvinyl chloride plate, a chlorinated polyvinyl chloride plate, a polypropylene plate, a polystyrene plate, a polysulfone plate, an epoxy resin plate, a phenol resin plate, an unsaturated polyester resin plate, a polyimide resin plate, and the like. The organic glass may be subjected to an appropriate surface treatment.

Among the above, a polycarbonate plate is preferable from the viewpoints of excellent transparency, impact resistance, and combustion resistance, and a polymethyl methacrylate plate is preferable from the viewpoints of high transparency, weather resistance, and mechanical strength. Among these, a polycarbonate plate is preferable.

The specific thickness (Tb) of the organic glass is not particularly limited, but is preferably 0.1 mm or more, and more preferably 0.3 mm or more, and is preferably 5.0 mm or less, and further preferably 3.0 mm.

The linear expansion coefficient (Cb) of the organic glass is generally larger than the linear expansion coefficient (Ca) of the inorganic glass. The specific linear expansion coefficient (Cb) of the organic glass is not particularly limited, but is preferably $1.5 \times 10^{-5}$ $K^{-1}$ or more, and more preferably $2.0 \times 10^{-5}$ $K^{-1}$ or more, and is preferably $1.2 \times 10^{-4}$ $K^{-1}$ or less, and more preferably $8.0 \times 10^{-5}$ $K^{-1}$ or less. The linear expansion coefficient of organic glass can be measured by, for example, JIS K 7197.

[Laminated glass]

The laminated glass of the present invention includes an interlayer film, and an inorganic glass and an organic glass laminated via the interlayer film. Since the interlayer film, the inorganic glass, and the organic glass used in the laminated glass of the present invention are as described above, a description thereof will be omitted here.

The laminated glass of the present invention can be used in various fields. Specifically, it is used for a window glass of various vehicles such as automobiles, train carriages, ships, and airplanes, and various structures such as buildings, condominiums, detached houses, halls, and gymnasiums.

(Method for producing laminated glass)

The laminated glass of the present invention may be produced by disposing the interlayer film between the inorganic glass and the organic glass, and then thermocompression bonding these. The method for disposing the interlayer film between the inorganic glass and the organic glass is not particularly limited, but, for example, it is preferable to sandwich an interlayer film produced in advance between the inorganic glass and the organic glass. When the interlayer film has a multilayer structure, a plurality of separately provided resin layers may be stacked between the inorganic glass and the organic glass, and then the thermocompression bonding may be performed.

After the interlayer film or the plurality of resin layers have been disposed between the inorganic glass and the

**EP 3 901 114 A1**

organic glass, but before the thermocompression bonding is performed, air remaining between the inorganic glass and the organic glass may optionally be degassed. The degassing method is not particularly limited, but it is acceptable to pass through a pressing roll or to put in a rubber bag remove the air under reduced pressure.

Further, temporary adhesion may be performed before the thermocompression bonding. The temporary adhesion may be performed, for example, by pressing the inorganic glass and the organic glass between which the interlayer film or plurality of resin layers are disposed at a relatively low pressure, optionally while heating. The temporary adhesion may be performed, for example, with a vacuum laminator. In the case of degassing, the temporary adhesion may be performed after the degassing or together with the degassing.

The thermocompression bonding method is not particularly limited, but it is acceptable to apply pressure while heating in a state in which the interlayer film or plurality of resin layers are disposed between the inorganic glass and the organic glass. The heating temperature is preferably 60°C or more and 150°C or less, and more preferably 70°C or more and 120°C or less. The pressure is preferably 0.4 MPa or more and 1.5 MPa or less, and more preferably 0.5 MPa or more and 1.3 MPa or less. Further, the thermocompression bonding may employ a method of using an autoclave, a heating press, or the like, but it is preferable to use an autoclave. Although warpage tends to occur in laminated glass during cooling after thermocompression bonding, in the present invention, such warpage is suppressed by using the above-described interlayer film.

Examples

The present invention will now be described in more detail by way of examples, but the present invention is not limited to these examples.

The methods for measuring and evaluating the physical properties were as follows.

[Storage moduli (G1') and (G2')]

A film-like sample composed of each resin portion was cut to a length of 10 mm and a width of 5 mm, and the storage moduli (G1') and (G2') at 80°C were measured by measuring the viscoelasticity using a dynamic viscoelasticity measuring device (manufactured by IT Measurement Control Co., Ltd., trade name "DVA-200"). The measurement conditions were as follows.

(Measurement conditions)

| | |
|---|---|
| Deformation mode: | shear mode |
| Measurement temperature: | -50°C to 200°C |
| Rate of increase in temperature: | 5 °C/min |
| Measurement frequency: | 1 Hz |
| Strain: | 0.1% |
| Lower limit elastic modulus: | 10 Pa, 0.01 cN from lower limit dynamic value |

[Evaluation method]

(Warp age)

The laminated glass sample obtained in each example and comparative example was subjected to an autoclave treatment, and then a 25 mm × 305 mm, 2 mm-thick SUS plate was immediately placed on the glass surface thereof. The laminated glass sample was fixed by sandwiching it between a clamp 35 mm from the end, and then at a position 270 mm away from the clamp, the gap between the edge of the laminated glass sample and the SUS plate was measured as the warpage. The warpage amount was evaluated according to the following evaluation criteria. It is noted that the warpage amount was evaluated up to the first decimal place as significant figures.

A:　0.3 mm or less
B:　More than 0.3 mm and 1.0 mm or less
C:　More than 1.0 mm

(Foaming)

The laminated glass sample obtained in each example and comparative example was held in an environment of -40°C for 6 hours in accordance with the temperature dependence test of JIS R3211. The sample was then left in a 23°C environment until its temperature reached 23°C. Next, the sample was left in a 72°C environment for 3 hours, then in a 23°C environment for 1 hour, and the presence or absence of foaming was observed. Samples in which foaming was not observed were evaluated as an "A", and samples in which foaming was observed were evaluated as a "B".

(Cloudiness)

In the laminated glass sample obtained in each example and comparative example, samples in which cloudiness was not observed in the organic glass were evaluated as an "A", and samples in which cloudiness was observed in the organic glass were evaluated as a "B".

[Preparation of resin layers 1 to 4]

Resin layers 1 to 4 were each produced by the following method.
In the production of each resin layer, the components shown in Table 1 were blended in a stirring vessel in the predetermined rates shown in Table 1. The blended product was stirred at 2000 rpm for 9 minutes using a rotation/revolution mixer ("Awatori Rentaro ARE-310", manufactured by Thinky Corporation), and then cells were removed by processing for 3 minutes at 2200 rpm. This operation was repeated until the blended product became uniform to obtain a liquid curable resin material.
A PET release film (trade name "PET50D1-C", manufactured by Nipper) was closely adhered to the upper surface of a coated glass with ethyl acetate so that the release treatment surface was on top. The curable resin material obtained above was coated on the release treatment surface of the PET release film, and then spacers were disposed on the two edges of the PET release film so that the cured product would have a predetermined thickness. A UV transmitting glass having the same size as the coated glass was provided, and a PET release film was also closely adhered on the UV transmitting glass with ethyl acetate so that the release treatment surface was exposed. The curable resin material and the spacers were sandwiched between the coated glass and the UV transmitting glass, and the UV transmitting glass was placed over the curable resin material so that the release treatment surface of the PET release film faced inward. Then, the curable resin material was cured by using a UV irradiator to irradiate ultraviolet rays from above the UV transmitting glass at an illuminance of 3 mW/cm$^2$ so that the irradiation amount was 900 mJ/cm$^2$ to obtain a resin layer (resin film). Resin layers 1 to 4 used as a core layer were 400 $\mu$m and those used as a skin layer were 200 $\mu$m.
In resin layers 1 to 4, a sea-island structure was formed by the acrylic resin and the polyvinyl acetal in which the acrylic resin constituted the island portion and the polyvinyl acetal constituted the sea portion.

[Preparation of resin layers 5 to 7]

Resin layer 5 was provided by mixing a polyvinyl acetal resin and a plasticizer according to the formulation shown in Table 1 and extruding the resultant mixture. A polyurethane resin (trade name "AG8451", manufactured by Lubrizol) was formed into a sheet to provide resin layer 6. Further, an ethylene-vinyl acetate copolymer resin (trade name "EV40W" manufactured by DuPont-Mitsui Chemicals, vinyl acetate content 41% by mass) was formed into a sheet to provide resin layer 7. Resin layers 5 to 7 used as a core layer were 400 $\mu$m and those used as a skin layer were 200 $\mu$m.
The storage modulus of the obtained resin layers (resin films) 1 to 7 was measured according to the above-described method and used as the storage modulus of the first and second resin portions.

Table 1

| | | | Resin layer 1 | Resin layer 2 | Resin layer 3 | Resin layer 4 | Resin layer 5 | Interlayer film 1 |
|---|---|---|---|---|---|---|---|---|
| Blend (parts by mass) | Acrylic monomer | MEDOL-10 | 20 | 20 | 20 | 20 | | 20 |
| | | BA | 60 | 60 | 60 | | | 60 |
| | | BzA | 20 | 20 | 20 | | | 20 |
| | | CHA | | | | 80 | | |
| | Polyvinyl acetal | Polyvinyl acetal 1 | 15.9 | | | 15.9 | | |
| | | Polyvinyl acetal 2 | | 15.9 | 31.8 | | | 15.9 |
| | | Polyvinyl acetal 3 | | | | | 72 | |
| | Plasticizer | | | | | | 28 | |
| | Photopolymerization initiator | | 2.0 | 2.0 | 2.0 | 2.0 | | 2.0 |
| Rate to overall resin (% by mass) | | Acrylic resin | 86% | 86% | 76% | 86% | - | 86% |
| | | PVAc | 14% | 14% | 24% | 14% | 100% | 14% |

The polyvinyl acetal resins in Table 1 are as follows. It is noted that polyvinyl acetal 1, polyvinyl acetal 2 and polyvinyl acetal 3 were all polyvinyl butyral resins.

Table 2

| | Polyvinyl acetal 1 | Polyvinyl acetal 2 | Polyvinyl acetal 3 |
|---|---|---|---|
| Degree of butyralization (mol%) | 68 | 71 | 68 |
| Degree of acetylation (mol%) | 1 | 1 | 1 |
| Hydroxy groups (mol%) | 31 | 28 | 31 |
| Degree of polymerization | 830 | 240 | 1700 |

The various components other than the polyvinyl acetal resin in Table 1 were as follows.

MEDOL-10:                            (2-methyl-2-ethyl-1,3-dioxolane-4-yl)methyl acrylate, trade name "MEDOL-10", Osaka Organic Chemical Industry Ltd.
BA:                                  n-butyl acrylate
BzA:                                 benzyl acrylate
CHA:                                 cyclohexyl acrylate
Plasticizer:                         triethylene glycol di-2-ethylhexanoate (3GO)
Photopolymerization initiator:       Trade name "Irgacure184", manufactured by Ciba Specialty Chemicals

[Examples 1 to 6 and Comparative Examples 1 to 4]

(Production of laminated glass)

A float glass was prepared as the inorganic glass, and a polycarbonate plate (trade name "Takiron CIC 1600", manufactured by Yukata Panel) was provided as the organic glass. The float glass and the polycarbonate plate had a size of 25 mm × 305 mm, and a thickness as shown in Table 3.
Each of the resin layers produced above was cut to 30 mm × 310 mm, and then using the resin layers as shown in Table 3 as the core layer (400 μm) and skin layers (200 μm), the resin layers were laminated in order of skin layer / core layer / skin layer between the glass plate and the polycarbonate plate. The float glass and the polycarbonate plate having these resin layers disposed between them were temporarily fixed with tape, and then temporarily adhered for 3 minutes at 60°C and 0.1 MPa in a vacuum laminator (trade name "MVLP 500/600", manufactured by Meiki & Company, Ltd.). Then, main pressure-bonding was performed in an autoclave (trade name "HP-5050MAH-H14", manufactured by Kyoshin Engineering Co., Ltd.) at 80°C and 0.5 MPa for 1 hour. Then, portions protruding from the glass were cut off to obtain a laminated glass sample of each example and comparative example. The thickness of the film was 800 $\mu$m.

[Example 7]

(Production of interlayer film 1)

A resin film (interlayer film 1) was produced by the same method as that of resin layer 2 as shown in Table 1, except that the thickness was changed to 800 $\mu$m. In the interlayer film 1, the acrylic resin and the polyvinyl acetal resin formed a sea-island structure in which the acrylic resin constituted the island portion (first resin portion) and the polyvinyl acetal resin constituted the sea portion (second resin portion).

(Production of laminated glass)

The same float glass and polycarbonate plate as those in Example 1 were provided, the interlayer film 1 produced above was cut to 30 mm × 310 mm, and then the interlayer film 1 was laminated between the glass plate and the polycarbonate plate. The float glass and the polycarbonate plate sandwiching the interlayer film 1 were temporarily fixed with tape, and then temporarily adhered for 3 minutes at 60°C and 0.1 MPa in a vacuum laminator (trade name "MVLP 500/600", manufactured by Meiki & Company, Ltd.). Then, main pressure-bonding was performed in an autoclave (trade name "HP-5050MAH-H14", manufactured by Kyoshin Engineering Co., Ltd.) at 80°C and 0.5 MPa for 1 hour. The portions protruding from the glass were cut off to obtain a laminated glass sample of Example 7. The thickness of the film was 800 $\mu$m.

(Preparation of sample for storage modulus measurement)

In this example, a curable resin material in which only the acrylic monomer and the photopolymerization initiator were blended in the blending parts shown in Table 1 was coated and cured by the same method as in the production of interlayer film 1 to obtain a film sample having a thickness of 800 $\mu$m. Using this film sample, the storage modulus (G1') of the first resin portion (island portion) was measured.

Similarly, a film sample having a thickness of 800 $\mu$m was obtained by forming polyvinyl acetal resin 1 into a sheet, and the storage modulus (G2') of the second resin portion (sea portion) was measured using the film sample.

Table 3

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Layer structure | | Fig. 3 | Fig. 3 | Fig. 3 | Fig. 3 | Fig. 3 | Fig. 3 | Fig. 1 | Fig. 3 | Fig. 3 | Fig. 3 | Fig. 3 |
| Structure location | First resin portion | Core layer | Core layer | Core layer | Core layer | Core layer | Core layer | Island portion | Core layer | Core layer | Core layer | Core layer |
| | Second resin portion | Skin layer | Skin layer | Skin layer | Skin layer | Skin layer | Skin layer | Sea portion | Skin layer | Skin layer | Skin layer | Skin layer |
| Resin layer | First resin portion | Resin layer 2 | Resin layer 2 | Resin layer 2 | Resin layer 2 | Resin layer 6 | Resin layer 6 | Interlayer film 1 | Resin layer 2 | Resin layer 6 | Resin layer 6 | Resin layer 6 |
| | Second resin portion | Resin layer 1 | Resin layer 1 | Resin layer 4 | Resin layer 3 | Resin layer 2 | Resin layer 4 | | Resin layer 7 | Resin layer 4 | Resin layer 7 | Resin layer 5 |
| Storage modulus (80°C) Pa | First resin portion (G1') | $3.3 \times 10^4$ | $3.3 \times 10^4$ | $3.3 \times 10^4$ | $3.3 \times 10^4$ | $6.5 \times 10^5$ | $6.5 \times 10^5$ | $6.4 \times 10^3$ | $3.3 \times 10^4$ | $6.5 \times 10^5$ | $6.5 \times 10^5$ | $6.5 \times 10^5$ |
| | Second resin portion (G2') | $6.9 \times 10^4$ | $6.9 \times 10^4$ | $1.6 \times 10^5$ | $5.4 \times 10^4$ | $3.3 \times 10^4$ | $1.6 \times 10^5$ | $2.4 \times 10^5$ | $2.0 \times 10^4$ | $1.6 \times 10^5$ | $2.0 \times 10^4$ | $2.3 \times 10^5$ |
| Product (kG1') Pa | | $2.6 \times 10^5$ | $1.3 \times 16^6$ | $2.6 \times 10^5$ | $2.5 \times 10^4$ | $1.6 \times 10^6$ | $1.6 \times 10^6$ | $5.1 \times 10^4$ | $2.6 \times 10^5$ | $1.6 \times 10^7$ | $2.6 \times 10^7$ | $2.6 \times 10^7$ |
| Thickness mm | Inorganic glass plate | 2.0 | 1.0 | 2.0 | 3.2 | 3.2 | 3.2 | 2.0 | 2.0 | 1.6 | 1.0 | 1.0 |
| | Polycarbonate plate | 2.0 | 5.0 | 2.0 | 0.3 | 1.0 | 1.0 | 2.0 | 2.0 | 5.0 | 5.0 | 5.0 |
| Linear expansion coefficient K$^{-1}$ | Inorganic glass plate | $8.5 \times 10^{-6}$ | $8.5 \times 10^{-6}$ | $8.5 \times 10^{-6}$ | $8.5 \times 10^{-6}$ | $8.5 \times 10^{-6}$ | $8.5 \times 10^{-6}$ | $8.5 \times 10^{-6}$ | $8.5 \times 10^{-6}$ | $8.5 \times 10^{-6}$ | $8.5 \times 10^{-6}$ | $8.5 \times 10^{-6}$ |
| | Polycarbonate plate | $6.8 \times 10^{-5}$ | $6.8 \times 10^{-5}$ | $6.8 \times 10^{-5}$ | $6.8 \times 10^{-5}$ | $6.8 \times 10^{-5}$ | $6.8 \times 10^{-5}$ | $6.8 \times 10^{-5}$ | $6.8 \times 10^{-5}$ | $6.8 \times 10^{-5}$ | $6.8 \times 10^{-5}$ | $6.8 \times 10^{-5}$ |
| Coefficient (k) | | 8.0 | 40.0 | 8.0 | 0.8 | 2.5 | 2.5 | 8.0 | 8.0 | 25.0 | 40.0 | 40.0 |
| Warpage | | A | B | A | A | B | B | B | B | C | C | C |
| Foaming | | A | A | A | A | A | A | A | B | A | B | A |
| Cloudiness | | A | A | A | A | A | A | A | A | A | A | B |

In each of the above examples, by setting the storage modulus (G1') of the first resin portion and the product (kG1') of the coefficient (k) to less than a predetermined value and setting the storage modulus (G2') of the second resin portion to a larger value than a predetermined value, no warpage occurred even when the laminated glass was produced in an autoclave. Further, cells were not formed even when the laminated glass was heated and cooled.

In contrast, in each of the comparative examples, because the product (kG1') of the coefficient (k) was equal to or more than the predetermined value, or the storage modulus (G2') of the second resin portion was equal to or less than the predetermined value, one of warpage or cells occurred.

Reference Signs List

| | |
|---|---|
| 10, 20, 30 | interlayer film |
| 11 | inorganic glass |
| 12 | organic glass |
| 21 | first resin layer |
| 22 | second resin layer |
| 23 | third resin layer |

**Claims**

1. An interlayer film for laminated glass that is disposed between an inorganic glass and an organic glass to bond the inorganic glass and the organic glass together,

   the interlayer film for laminated glass comprising at least a first resin portion and a second resin portion,
   the interlayer film for laminated glass having a total thickness of 50 $\mu$m or more and 2.0 mm or less,
   a product (kG1') of a storage modulus (G1') of the first resin portion measured at 80°C at a frequency of 1 Hz in a shear mode and a coefficient (k) calculated by the following formula (1) being less than $1.1 \times 10^7$ Pa, and
   a storage modulus (G2') of the second resin portion measured at 80°C at a frequency of 1 Hz in a shear mode being larger than $2.5 \times 10^4$ Pa,

   $$k = (Cb \times Tb) / (Ca \times Ta) \quad (1)$$

   wherein Ca is a linear expansion coefficient of the inorganic glass, Cb is a linear expansion coefficient of the organic glass, Ta is a thickness of the inorganic glass, and Tb is a thickness of the organic glass.

2. The interlayer film for laminated glass according to claim 1, wherein the storage modulus (G1') of the first resin portion is $8.0 \times 10^5$ Pa or less.

3. The interlayer film for laminated glass according to claim 1 or 2, wherein a content of a plasticizer is 0 parts by mass or more and less than 10 parts by mass per 100 parts by mass of the resins included in the whole interlayer film for laminated glass.

4. The interlayer film for laminated glass according to any one of claims 1 to 3, wherein the first and second resin portions each comprise at least one resin selected from the group consisting of an acrylic resin, a polyvinyl acetal resin, a polyvinyl alcohol resin, a polyurethane resin, an ethylene-vinyl acetate copolymer resin, an ionomer resin, a polyamide resin, and an isobutylene resin.

5. The interlayer film for laminated glass according to any one of claims 1 to 4, comprising a first resin layer and a second resin layer provided on one surface of the first resin layer, wherein the first resin layer is composed of the first resin portion and the second resin layer is composed of the second resin portion.

6. The interlayer film for laminated glass according to claim 5, comprising a third resin layer provided on the other surface of the first resin layer, wherein the third resin layer is composed of the second resin portion.

7. The interlayer film for laminated glass according to any one of claims 1 to 4, wherein

the interlayer film for laminated glass has a single-layer structure, and has a phase-separated structure constituted by a first phase and a second phase, and

wherein the first phase is composed of a first resin portion and the second phase is composed of a second resin portion.

8. A laminated glass comprising:

an interlayer film for laminated glass; and

an inorganic glass and an organic glass laminated via the interlayer film for laminated glass, the interlayer film for laminated glass comprising at least a first resin portion and a second resin portion, the interlayer film for laminated glass having a total thickness of 50 μm or more and 2.0 mm or less, a product (kG1') of a storage modulus (G1') of the first resin portion measured at 80°C at a frequency of 1 Hz in a shear mode and a coefficient (k) calculated by the following formula (1) being less than $1.1 \times 10^7$ Pa, and a storage modulus (G2') of the second resin portion measured at 80°C at a frequency of 1 Hz in a shear mode being larger than $2.5 \times 10^4$ Pa,

$$k = (Cb \times Tb) / (Ca \times Ta) \quad (1)$$

wherein Ca is a linear expansion coefficient of the inorganic glass, Cb is a linear expansion coefficient of the organic glass, Ta is a thickness of the inorganic glass, and Tb is a thickness of the organic glass.

Fig. 1

Fig. 2

Fig. 3

## INTERNATIONAL SEARCH REPORT

| International application No. |
| --- |
| PCT/JP2019/049985 |

**A. CLASSIFICATION OF SUBJECT MATTER**
C03C 27/12(2006.01)i; B32B 7/12(2006.01)i; B32B 17/10(2006.01)i
FI: C03C27/12 Q; B32B7/12; B32B17/10

According to International Patent Classification (IPC) or to both national classification and IPC

**B. FIELDS SEARCHED**

Minimum documentation searched (classification system followed by classification symbols)
C03C27/12; B32B7/12; B32B17/10

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2018/079720 A1 (HITACHI CHEMICAL CO., LTD.) 03.05.2018 (2018-05-03) entire text, all drawings | 1-8 |
| A | WO 2018/079732 A1 (HITACHI CHEMICAL CO., LTD.) 03.05.2018 (2018-05-03) entire text, all drawings | 1-8 |
| A | JP 60-008059 A (SEKISUI CHEMICAL CO., LTD.) 16.01.1985 (1985-01-16) entire text | 1-8 |
| A | JP 2015-151326 A (KURARAY CO., LTD.) 24.08.2015 (2015-08-24) entire text, all drawings | 1-8 |
| A | JP 2004-503406 A (3M INNOVATIVE PROPERTIES CO.) 05.02.2004 (2004-02-05) entire text, all drawings | 1-8 |

☒ Further documents are listed in the continuation of Box C. ☒ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 12 March 2020 (12.03.2020) | 24 March 2020 (24.03.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/049985

C (Continuation).    DOCUMENTS CONSIDERED TO BE RELEVANT

| Category* | Citation of document, with indication, where appropriate, of the relevant passages | Relevant to claim No. |
|---|---|---|
| E,A | JP 6653831 B1 (SHINKO GLASS IND. CO., LTD.) 26.02.2020 (2020-02-26) entire text | 1-8 |

Form PCT/ISA/210 (continuation of second sheet) (January 2015)

**INTERNATIONAL SEARCH REPORT**
Information on patent family members

International application No.

PCT/JP2019/049985

| Patent Documents referred in the Report | Publication Date | Patent Family | Publication Date |
|---|---|---|---|
| WO 2018/079720 A1 | 03 May 2018 | WO 2018/078882 A1 entire text, all drawings TW 201829184 A | |
| WO 2018/079732 A1 | 03 May 2018 | WO 2018/078881 A1 entire text, all drawings TW 201823179 A | |
| JP 60-008059 A | 16 Jan. 1985 | (Family: none) | |
| JP 2015-151326 A | 24 Aug. 2015 | (Family: none) | |
| JP 2004-503406 A | 05 Feb. 2004 | US 7238401 B1 entire text, all drawings JP 4819294 B2 WO 2001/096115 A1 AU 5734501 A KR 10-2003-0007920 A | |
| JP 6653831 B1 | 26 Feb. 2020 | (Family: none) | |

Form PCT/ISA/210 (patent family annex) (January 2015)

**EP 3 901 114 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001234129 A

### Non-patent literature cited in the description

- *CHEMICAL ABSTRACTS,* 30697-40-6
- *CHEMICAL ABSTRACTS,* 57043-35-3